# EUROPEAN PATENT APPLICATION

(11) **EP 4 644 872 A1**
(43) Date of publication of application: **05.11.2025**
(21) Application number: 24749556.7
(22) Date of filing: 22.01.2024
(51) Int. Cl.: G01N 21/64

(54) **MICROSCOPIC IMAGING METHOD AND APPLICATION**

(30) Priority: 03.02.2023 CN 202310106631
(71) Applicant: GeneMind Biosciences Company Limited, Shenzhen, Guangdong 518023 (CN)
(72) Inventor: SUN, Lei, Shenzhen, Guangdong 518023 (CN); CHEN, Weiyue, Shenzhen, Guangdong 518023 (CN); CAI, Jinsen, Shenzhen, Guangdong 518023 (CN); SHANG, Huan, Shenzhen, Guangdong 518023 (CN); QUAN, Wei, Shenzhen, Guangdong 518023 (CN)
(74) Representative: Michalski Hüttermann & Partner Patentanwälte mbB
(86) International application number: PCT/CN2024/073393
(87) International publication number: WO 2024/160075

(57) **Abstract**

The present application relates to the field of sequencing, and specifically relates to a method for adjusting a first optical parameter during sequencing and an application thereof. The present application discloses an adaptive optical adjustment method, which involves imaging a small region on a chip, estimating the sequencing brightness, and adjusting the laser power or exposure time to ensure that the base brightness falls within the range meeting the base calling requirements. This helps the sequencer stabilize sequencing signals despite performance fluctuations in the chip, a laser, a reagent, or an optical system.

## Description

### TECHNICAL FIELD

The present application relates to the technical field of imaging, in particular to a microscopic imaging method and application.

### BACKGROUND

Fluorescence microscopic imaging refers to using fluorescent molecules to label certain specific structures or components within a sample, exciting these fluorescent molecules with shorter-wavelength light to elevate them to a high-energy state, and then conducting microscopic imaging of the relatively longer-wavelength fluorescence emitted during the relaxation process. This is also referred to as fluorescence microscopy. With this technique, specific structures, molecules, or ions in a biological sample can be labeled to achieve "functional imaging", thereby acquiring sample information. In the fluorescence microscopic imaging process, the brightness of the fluorescence signal collected by the optical equipment determines the quality of the raw data image, which in turn affects the accuracy of the sample information. For example: When the signal brightness is too low, it becomes difficult to distinguish signals generated by the sample from the background signals; when the signal brightness is too high, the energy spillover (optical scattering) from adjacent signal points causes false positive signals. Moreover, in the fluorescence microscopic imaging process, various factors influence the instrument, potentially resulting in performance fluctuations. This renders the fluorescence signal generated during sample testing unstable, leading to deviations in the sample information. For example: When sequencing nucleic acid molecules using microscopic imaging technology, the sequencer experiences performance fluctuations caused by a chip, a laser, a reagent, an optical system, and the like, resulting in unstable sequencing signals and deviations in sequencing results.

Therefore, there is an urgent need to develop a method that can reduce the influence of signal fluctuations on the presentation of microscopic imaging results, thereby preventing these signal fluctuations from affecting the interpretation of the imaging data.

### SUMMARY

The present application aims to solve, at least to some extent, one of the technical problems in the related art.

To this end, in a first aspect of the present application, a microscopic imaging method is provided. The method includes: performing microscopic imaging processing on a biological sample on a surface of a solid carrier based on an imaging apparatus, where the imaging apparatus includes a laser; the microscopic imaging processing employs the laser to perform microscopic optical imaging on a fluorescence signal generated by the biological sample based on a first optical parameter, and the first optical parameter is laser power and/or laser irradiation time that meets a preset brightness standard.

According to some specific embodiments of the present application, a method for determining the first optical parameter includes:
(i) performing a first reaction on the biological sample based on an initial optical parameter, collecting a first fluorescence signal on the surface of the solid carrier after the first reaction, and determining a first brightness of the first fluorescence signal in at least part of a region of the solid carrier; and
(ii) judging whether the first brightness value meets the preset brightness standard by comparing the first brightness value with a preset standard brightness;

if the first brightness value meets the preset standard brightness, setting the initial optical parameters as the first optical parameter; and
if the first brightness value does not meet the preset standard brightness, adjusting the initial optical parameter based on a preset function so as to determine a second optical parameter that meets the preset standard brightness in the preset function, and replacing the initial optical parameter with the second optical parameter and repeating steps (i) and (ii) until the brightness value meets the preset brightness standard, thereby determining the optical parameter at that time as the first optical parameter,
where the preset function is a function established based on a second brightness value of a second fluorescence signal and a third optical parameter, the second fluorescence signal is collected from at least part of the solid-carrier surface after the biological sample undergoes a second reaction, the third optical parameter is the laser power and/or laser irradiation time used during the collection , and the second optical parameter being second laser power and/or second laser irradiation time.

Using the method according to the present application can reduce the impact of external factors causing signal brightness fluctuations on the accuracy of data obtained in the microscopic imaging process. This ensures that the microscopic imaging method, in an application process, remains unaffected by performance fluctuations caused by instruments, devices, consumables, reagents, systems, or methods, thus consistently yielding stable fluorescence signals and improving the accuracy of microscopic imaging data. Taking the technology of sequencing nucleic acid molecules through microscopic imaging technology as an example, the method enables the acquisition of stable sequencing signals even when performance fluctuations occur sequencer's chip, laser, reagent, or optical system. This reduces the deviation in sequencing results, thereby improving sequencing accuracy.

According to some specific embodiments of the present application, a calculation formula for the initial optical parameter is: Initial Optical Parameter = A × b, where A is an initial laser power, an initial laser irradiation time, or an initial laser parameter determined based on the initial laser power and the initial laser irradiation time of the laser; b is a ratio of a quality-control optical parameter to an average optical parameter of the solid carrier, where the quality-control optical parameter is quality-control laser power, and the average optical parameter is average laser power, or the quality-control optical parameter is a quality control laser irradiation time, and the average optical parameter is an average irradiation time, or the quality-control optical parameter is a quality control initial laser parameter, and the average optical parameter is average initial laser power. According to some specific embodiments of the present application, the step of performing the first base extension reaction on the biological sample, collecting the first fluorescence signal on the surface of the solid carrier after the first reaction, and determining the first brightness value of at least part of the region of the solid carrier includes: performing the first reaction on the biological sample, collecting an image of at least one field of view (FOV) where the first reaction occurs on the surface of the solid carrier, estimating average brightness value based on brightness value of each bright spot in the image, and outputting the average brightness value as the first brightness value.

According to some specific embodiments of the present application, the image is an image of one FOV.

According to some specific embodiments of the present application, the first reaction is one of first N reactions performed on the biological sample.

According to some specific embodiments of the present application, a value of N ranges from 1 to 5.

According to some specific embodiments of the present application, a method for estimating the average brightness value based on the brightness value of each bright spot in the image includes: identifying signal peaks and background peaks based on images of a plurality of detection channels in one FOV;
fitting greyscale values of all pixels in the image based on the signal peaks and the background peaks to determine a signal-peak distribution curve and a background-peak distribution curve; and determining the average brightness value based on the signal-peak distribution curve and the background-peak distribution curve.

According to some specific embodiments of the present application, determining the average brightness based on the signal-peak distribution curve and the background-peak distribution curve includes:
determining a median value of the signal peaks based on the signal-peak distribution curve;
determining a median value of the background peaks based on the background-peak distribution curve; and
determining a difference between the median value of the signal peaks and the median value of the background peaks, and using the difference as the average brightness.

According to some specific embodiments of the present application, the preset standard brightness is a preset standard brightness value range.

According to some specific embodiments of the present application, judging whether the first brightness value meets the preset brightness standard by comparing the first brightness value with the preset standard brightness includes:
comparing the first brightness value with the preset standard brightness, and determining that the first brightness value meets the preset brightness standard if the first brightness value falls within the preset standard brightness value range; or
determining that the first brightness value does not meet the standard if the first brightness value does not fall within the preset standard brightness value range.

According to some specific embodiments of the present application, the preset function includes at least one selected from a brightness-laser power function, a brightness-laser irradiation time function, and a brightness-laser power-laser irradiation time function.

According to some specific embodiments of the present application, a method for establishing the preset function includes:
setting a plurality of different third optical parameters, performing a third reaction based on the different third optical parameters, collecting a third fluorescence signal on the surface of the solid carrier after the third reaction, and determining the second brightness value of each third fluorescence signal, the third optical parameters being preset laser power, preset laser irradiation time, or a preset laser power-laser irradiation time array; and
performing fitting to obtain the preset function based on the third optical parameters and the second brightness.

According to some specific embodiments of the present application, the step of adjusting the initial optical parameter based on the preset function so as to determine the second optical parameter includes:
determining a fourth optical parameter based on the preset function and the preset standard brightness; and
adjusting the initial optical parameter to the fourth optical parameter and determining the fourth optical parameter as the second optical parameter.

According to some specific embodiments of the present application, in repeating steps (i) and (ii), in each step (i), the first brightness value is derived from first brightness of different FOVs in an image generated by a same instance of the first reaction; or
the first brightness value is derived from first brightness of a same FOV from different instances of the first reaction; or
the first brightness value is derived from first brightness of different FOVs from different instances of the first reaction.

According to some specific embodiments of the present application, the number of repetitions of steps (i) and (ii) is less than or equal to three.

According to some specific embodiments of the present application, after the step of determining the first optical parameter for sequencing, the method further includes: recording and storing the first optical parameter.

According to some specific embodiments of the present application, a coefficient of variation (CV) value of the first brightness value across different regions of the solid carrier is less than or equal to 5%.

According to some specific embodiments of the present application, the biological sample is a nucleic acid molecule, and the first reaction and the second reaction are base extension reactions performed on the biological sample on the surface of the solid carrier.

In a second aspect of the present application, a microscopic imaging apparatus is provided. The apparatus includes a laser and a first optical parameter determination system, where the first optical parameter determination system is configured to determine a first optical parameter when performing microscopic imaging processing on a biological sample on a surface of a solid carrier, and the first optical parameter is laser power and/or laser time that meets a preset brightness standard.

According to some specific embodiments of the present application, the first optical parameter determination system includes:
a first brightness determination unit, configured to perform a first reaction on the biological sample based on an initial optical parameter, collect a first fluorescence signal on the surface of the solid carrier after the first reaction, and determine a first brightness value of the first fluorescence signal in at least part of a region of the solid carrier; and
a first brightness value judgment unit, configured to judge whether the first brightness value meets the preset brightness standard by comparing the first brightness value with a preset standard brightness;
if the first brightness value meets the preset standard brightness, setting the initial optical parameters as the first optical parameter; and
if the first brightness value does not meet the preset standard brightness" adjusting the initial optical parameter based on a preset function so as to determine a second optical parameter that meets the preset standard brightness in the preset function, and replacing the initial optical parameter with the second optical parameter and repeating the operations of the first brightness value determination unit and the first brightness value judgment unit until the brightness meets the preset brightness standard, thereby determining the first optical parameter,
where the preset function is a function established based on a second brightness value of a second fluorescence signal and a third optical parameter, the second fluorescence signal is collected from at least part of the solid-carrier surface after the biological sample undergoes a second reaction, the third optical parameter is the laser power and/or laser irradiation time used during the collection, and the second optical parameter being second laser power and/or second laser irradiation time.

According to some specific embodiments of the present application, a calculation formula for the initial optical parameter is: Initial Optical Parameter = A × b, where A is an initial laser power, an initial laser irradiation time, or an initial laser parameter determined based on the initial laser power and the initial laser irradiation time of the laser; b is a ratio of a quality-control optical parameter to an average optical parameter of the solid carrier, where
the quality-control optical parameter is quality-control laser power, and the average optical parameter is average laser power, or
the quality-control optical parameter is a quality control laser irradiation time, and the average optical parameter is an average irradiation time, or
the quality-control optical parameter is a quality control initial laser parameter, and the average optical parameter is an average initial laser parameter.

According to some specific embodiments of the present application, the step of performing the first reaction on the biological sample, collecting the first fluorescence signal on the surface of the solid carrier after the first reaction, and determining the first brightness value of at least part of the region of the solid carrier includes:
performing the first reaction on the biological sample, collecting an image of at least one field of view (FOV) where the first reaction occurs on the surface of the solid carrier, estimating average brightness value based on brightness value of each bright spot in the image, and outputting the average brightness value as the first brightness value.

According to some specific embodiments of the present application, the image is an image of one FOV.

According to some specific embodiments of the present application, the first reaction is one of first N reactions performed on the biological sample.

According to some specific embodiments of the present application, a value of N ranges from 1 to 5.

According to some specific embodiments of the present application, a method for estimating the average brightness value based on the brightness value of each bright spot in the image includes: identifying signal peaks and background peaks based on images of a plurality of detection channels in one FOV;
fitting greyscale values of all pixels in the image based on the signal peaks and the background peaks to determine a signal-peak distribution curve and a background-peak distribution curve; and determining the average brightness based on the signal-peak distribution curve and the background-peak distribution curve.

According to some specific embodiments of the present application, determining the average brightness based on the signal-peak distribution curve and the background-peak distribution curve includes:
determining a median value of the signal peaks based on the signal-peak distribution curve;
determining a median value of the background peaks based on the background-peak distribution curve; and
determining a difference between the median value of the signal peaks and the median value of the background peaks, and using the difference as the average brightness.

According to some specific embodiments of the present application, the preset standard brightness is a preset standard brightness value range.

According to some specific embodiments of the present application, judging whether the first brightness value meets the preset brightness standard by comparing the first brightness value with the preset standard brightness includes:
comparing the first brightness value with the preset standard brightness, and determining that the first brightness value meets the preset brightness standard if the first brightness value falls within the preset standard brightness value range; or
determining that the first brightness value does not meet the preset brightness standard if the first brightness value does not fall within the preset standard brightness value range.

According to some specific embodiments of the present application, the preset function includes at least one selected from a brightness-laser power function, a brightness-laser irradiation time function, and a brightness-laser power-laser irradiation time function.

According to some specific embodiments of the present application, a method for establishing the preset function includes:
setting a plurality of third optical parameters, performing a third reaction based on the different third optical parameters, collecting a third fluorescence signal on the surface of the solid carrier after the third reaction, and determining the second brightness value of each third fluorescence signal, the third optical parameters being preset laser power, preset laser irradiation time, or a preset laser power-laser irradiation time array; and
performing fitting to obtain the preset function based on the third optical parameters and the second brightness.

According to some specific embodiments of the present application, the step of adjusting the initial optical parameter based on the preset function so as to determine the second optical parameter includes:
determining a fourth optical parameter based on the preset function and the preset standard brightness; and
adjusting the initial optical parameter to the fourth optical parameter and determining the fourth optical parameter as the second optical parameter.

According to some specific embodiments of the present application, when the first brightness value determination unit and the first brightness value judgment unit are repeated, in each first brightness determination unit, the first brightness value is derived from first brightness of different FOVs in an image of the same cycle of base extension; or
the first brightness value is derived from first brightness of a same FOV in images of different cycles of base extension; or
the first brightness value is derived from first brightness of different FOVs in images of different cycles of base extension.

According to some specific embodiments of the present application, the number of repetitions of the first brightness value determination unit and the first brightness value judgment unit is less than or equal to three.

According to some specific embodiments of the present application, the microscopic imaging apparatus further includes a storage unit, where the storage unit is connected to the first brightness value judgment unit, and the storage unit is configured to record and store the first optical parameter.

According to some specific embodiments of the present application, a coefficient of variation (CV) value of the first brightness value across different regions of the solid carrier is less than or equal to 5%.

According to some specific embodiments of the present application, the biological sample is a nucleic acid molecule, and the first reaction and the second reaction are base extension reactions performed on the biological sample on the surface of the solid carrier.

In a third aspect of the present application, the use of the microscopic imaging apparatus according to the second aspect in sequencing is provided.

In a fourth aspect of the present application, a method for acquiring a preset optical parameter of a sequencing chip is provided. The method includes: obtaining a first optical parameter using the method for determining the first optical parameter in the microscopic imaging method according to the first aspect, and using a value of the first optical parameter as a preset optical parameter of the sequencing chip.

The optical parameters provided according to the present application can be recorded during the quality control of sequencing chips and reagents, and these "recommended optical parameters" can be stored in the form of a QR code or similar means in the product information of the reagent kit. During the sequencing process, users can immediately select the optical parameters that passed quality control for this batch based on the information from reading the QR code. This reduces the frequency of using the adaptive laser power adjustment process, thereby saving sequencing time. In a fifth aspect of the present application, a sequencing method is provided. The sequencing method includes: performing microscopic optical imaging on a fluorescence signal generated by a biological sample on a sequencing chip using the microscopic imaging method according to the first aspect; or performing microscopic optical imaging on a fluorescence signal generated by a biological sample on a sequencing chip using the microscopic imaging apparatus according to the second aspect, and analyzing an imaging result to obtain a specific sequence of the biological sample on the sequencing chip.

In a sixth aspect of the present application, an electronic device for determining an optical parameter during sequencing is provided. The electronic device includes a memory and a processor,
where the processor runs a program corresponding to executable program code by reading the executable program code stored in the memory, so as to implement the microscopic imaging method according to the first aspect.

In a seventh aspect of the present application, a computer-readable storage medium is provided. The computer-readable storage medium stores a computer program, where the program, when run by a processor, implements the microscopic imaging method according to the first aspect. Additional aspects and advantages of the present application will in part be illustrated in the following description and become apparent from the following description, or may be learned by the implementation of the present application.

### BRIEF DESCRIPTION OF THE DRAWINGS

The aforementioned and/or additional aspects and advantages of the present application will become apparent and easily understood from the description of the embodiments with reference to the following drawings, in which:
FIG. 1 illustrates a schematic diagram of steps in a method for adjusting a first optical parameter during sequencing according to an embodiment of the present application;
FIG. 2 illustrates a schematic flowchart of a method for adjusting a first optical parameter during sequencing according to an embodiment of the present application;
FIG. 3 illustrates a signal peak and a background peak when estimating brightness value according to an embodiment of the present application;
FIG. 4 illustrates a graph showing the linear functional relationship between laser power-sequencing brightness, where the left panel represents the sequencing brightness variation curve of Chip 1 on different sequencers, while the right panel represents the sequencing brightness variation curve of Chip 2 on different sequencers, according to an embodiment of the present application;
FIG. 5 illustrates sequencing brightness curves generated under different optical parameters according to an embodiment of the present application; and
FIG. 6 illustrates a graph of corresponding brightness percentages versus power adjustment percentages according to an embodiment of the present application.

### DETAILED DESCRIPTION

Examples of the present application are described in detail below. The examples described below are exemplary and are intended to explain the present application only, and they should not be construed as limiting the present application.

It should be noted that the terms "first" and "second" are used for descriptive purposes only and should not be construed as indicating or implying relative importance or implicitly indicating the number of indicated technical features. Therefore, features defined by "first" and "second" may explicitly or implicitly include one or more of the features. Within the scope of the embodiments of the present application, the first reaction may also be referred to as the second reaction, and correspondingly, the second reaction may be referred to as the first reaction. Further, in the description of the present application, "a plurality of" means two or more unless otherwise specified.

The endpoints of the ranges and any values disclosed herein are not limited to the precise ranges or values, and these ranges or values should be understood to encompass values close to these ranges or values. For numerical ranges, the endpoint values of each range, the endpoint values of each range and single point values, as well as single point values, can be combined with each other to obtain one or more new numerical ranges, which should be construed as being specifically disclosed herein.

In order to facilitate the understanding of the present application, some technical and scientific terms are specifically defined below. Unless otherwise specifically defined herein, all other technical and scientific terms used herein have the meanings generally understood by those of ordinary skill in the art to which the present application belongs.

The term "comprise", "comprises", "comprising", "include", "includes" or "including" is openended, i.e., including what is meant by the present application, but not excluding other aspects.

The terms "optionally", "optional", or "option" herein generally refer to an event or condition described thereafter that may or may not occur. Moreover, the description encompasses both situations where the event or condition occurs and situations where the event or condition does not occur.

The term "FOV" herein stands for Field of View, and if the width (W) of the imaging plane is fixed, the size of the FOV is directly determined by the focal length. The larger the focal length, the farther the view, but the smaller the FOV. The smaller the focal length, the closer the view, but the FOV increases.

The term "initial optical parameters" herein refers to the initialized laser power and laser irradiation time.

The term "CV" herein refers to the coefficient of variation, which is the ratio of the standard deviation to the mean, expressed as a percentage (%).

The term "sequencing" herein may also be referred to as "nucleic acid sequencing" or "gene sequencing". The three are used interchangeably and refer to the determination of the type and order of bases or nucleotides (including nucleotide analogs) in a nucleic acid molecule. Sequencing involves the process of binding nucleotides to a template and collecting the corresponding signals emitted by the nucleotides (including analogs). The so-called sequencing includes sequencing by synthesis (SBS) and/or sequencing by ligation (SBL), DNA sequencing and/or RNA sequencing, and long-read sequencing and/or short-read sequencing (long-read sequencing refers to the sequencing of long nucleic acid molecule fragments, short-read sequencing refers to the sequencing of short nucleic acid molecule fragments, the long fragment and short fragment are defined relatively; e.g., nucleic acid molecules longer than 1 Kb, 2 Kb, 5 Kb, or 10 Kb may be referred to as long fragments, and nucleic acid molecules shorter than 1 Kb or 800 bp may be referred to as short fragments).

The term "base extension reaction" refers to a reaction process in which a base or nucleotide (including nucleotide analogs) in a nucleic acid molecule extends the nucleic acid molecule in the 5' to 3' direction. In the field, any reaction involving the amplification of nucleic acid molecules involves the base extension reaction, including PCR, sequencing, and others.

The sequencing generally involves multiple cycles of process to achieve the determination of the type and order of multiple bases or nucleotides on a nucleic acid template. The embodiments of the present application refer to each cycle of the "process to achieve the determination of the type and order of multiple bases or nucleotides on a nucleic acid template" as "one cycle of sequencing". "One cycle of sequencing", also referred to as "sequencing cycle", may be defined as one base extension of four types of nucleotides/bases; in other words, "one cycle of sequencing" may be defined as the completion of the determination of the base or nucleotide type at any given position on the template. For sequencing platforms that achieve sequencing on the basis of polymerization or ligation reactions, one cycle of sequencing includes the process of binding four types of nucleotides (including nucleotide analogs) to the nucleic acid template at a time according to the base complementary rule and collecting the corresponding signals emitted. For platforms that achieve sequencing on the basis of the polymerization reaction, a reaction system includes reaction substrate nucleotide, polymerase, and a nucleic acid template. A sequence fragment (a sequencing primer) binds to the nucleic acid template, and on the basis of the base pairing rules and the principle of polymerization reaction, the added reaction substrate nucleotides are linked to the sequencing primer under the catalysis of the polymerase to realize the binding of a nucleotide to a specific position on the nucleic acid template. Generally, one cycle of sequencing may include one or more base extensions (repeats). For example, four types of nucleotides are sequentially added to the reaction system to each perform base extensions and corresponding collection of reaction signals, and one cycle of sequencing includes four base extensions; for another example, four types of nucleotides are added into the reaction system in any combinations (such as in pairs or in one-three combinations), the two combinations each perform base extensions and corresponding collection of reaction signals, and one cycle of sequencing includes two base extensions; for yet another example, four types of nucleotides are added simultaneously to the reaction system for base extension and reaction signal collection, and one cycle of sequencing includes one base extension.

The term "nucleic acid molecule" refers to polymeric forms of nucleotides of any length and may include ribonucleotides or analogs thereof, deoxyribonucleotides or analogs thereof, and mixtures of the above nucleotides or analogs thereof. The nucleic acid molecule may refer to a single-stranded polynucleotide or a double-stranded polynucleotide. Nucleotides in a nucleic acid molecule may include naturally occurring nucleotides and functionally alternative analogs thereof. The term "phasing" herein, also referred to as "phase imbalance", "dephasing", or "phase diversity", describes the phenomenon in a chemical reaction where the reactions within a population, such as the nucleic acid molecules in a nucleic acid molecular cluster, are not synchronized. This includes lagging/delay (phasing or sequence lag) and advancing/leading (prephasing or sequence lead).

In the fluorescence microscopic imaging process, the brightness of the fluorescence signal collected by the optical equipment determines the quality of the raw data image, which in turn affects the accuracy of the sample information. Taking sequencing technology as an example, when conducting sequencing based on reversible terminators containing cleavable fluorophores, the brightness value of the fluorescence signals collected by optical equipment determines the quality of the raw data image and ultimately impacts the accuracy of base calling. For example: When the signal brightness is too low, it becomes difficult to distinguish signals generated by the sample from background signals, leading to base calling deletion errors; when the signal brightness is too high, the energy spillover (optical scattering) from adjacent signal points causes excessive signals during base calling, resulting in insertion errors. During sequencing, multiple factors such as a chip, a laser, a reagent, and an optical system influence the sequencer, causing performance fluctuations. These performance fluctuations lead to instability in sequencing signals generated during sequencing, thereby causing deviations in sequencing results and impacting the accuracy of sequencing results.

In view of this, the present application provides a microscopic imaging method capable of performing microscopic imaging in scenarios with insufficient signal stability, ensuring that the result data obtained through microscopic imaging are not affected by signal stability. The microscopic imaging method referred to in the present application is based on microscopic imaging processing performed by an imaging apparatus on biological samples on the surface of a solid carrier. The imaging apparatus includes a laser, which is configured to generate excitation light to excite fluorescent molecules in the biological sample to emit light, facilitating microscopic optical imaging.

In the embodiments of the present application, the solid carrier is understood as the carrier or support for the biological sample. In some application examples, the solid carrier may also be referred to as a solid substrate. The biological sample referred to in the embodiments of the present application refers to a biological sample that, under certain conditions or reactions, can generate a fluorescence signal upon excitation by specific excitation light. As an example, the biological sample may be various types of cells, which contain fluorescent substances, or cells that, after processing or being placed under certain conditions, can undergo changes such as generation, increase, reduction, or elimination of fluorescence signals. As another example, the biological sample may be biomolecules with fluorophores, or biomolecules capable of binding to fluorophores or compounds carrying fluorophores. Exemplarily, the biomolecule may be a nucleic acid molecule, but it is not limited thereto.

The microscopic imaging method aims to obtain the fluorescence signal brightness that meets a requirement, and under this premise, determines a first optical parameter. A laser is then used to perform microscopic optical imaging on the fluorescence signal generated by biomolecules on the surface of the solid carrier based on the first optical parameter. In the embodiments of the present application, the first optical parameter refers to the operating parameter of the laser, which may be laser power that meets the brightness requirement, laser irradiation time that meets the brightness requirement, or both laser power and laser irradiation time that meet the brightness requirement. In the embodiments of the present application, the term "meeting the brightness requirement" refers to meeting the brightness condition of a preset standard brightness value or value range.

### Microscopic Imaging Method

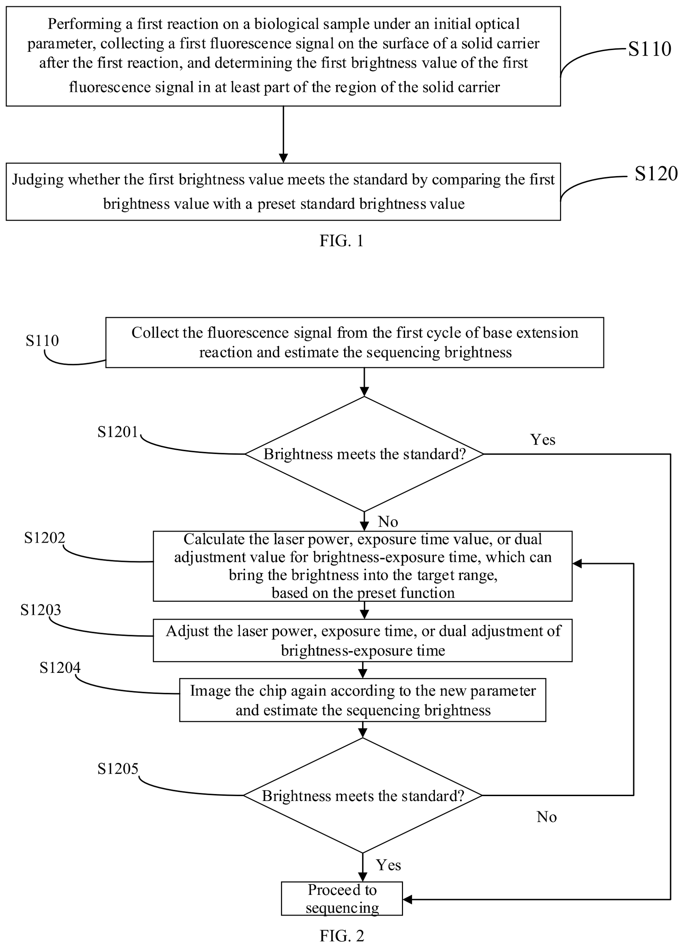

According to some specific embodiments of the present application, a method for determining a first optical parameter is provided in the present application, as shown in FIG. 1, which includes the following steps.

In S110, based on an initial optical parameter, a first reaction is performed on a biological sample, a first fluorescence signal on a surface of a solid carrier after the first reaction is collected, and a first brightness value of the first fluorescence signal in at least part of a region of the solid carrier is determined.

In S120, it is judged whether the first brightness value meets the preset brightness standard by comparing the first brightness value with a preset standard brightness.

If the first brightness value meets the preset standard brightness, setting the initial optical parameters as the first optical parameter.

If the first brightness value does not meet the preset standard brightness, the initial optical parameter is adjusted based on a preset function so as to determine a second optical parameter that meets the preset standard brightness in the preset function; the initial optical parameter is replaced by the second optical parameter and steps S110 and S 120 are repeated until the brightness value meets the preset brightness standard, thereby determining the optical parameter at that time as the first optical parameter.

The preset function is a function established based on the second brightness value of a second fluorescence signal and a third optical parameter, the second fluorescence signal is collected from at least part of the solid-carrier surface after the biological sample undergoes a second reaction, the third optical parameter is the laser power and/or laser irradiation time used during the collection . The second optical parameter is the second laser power and/or the second laser irradiation time.

In step S110, after the biological sample undergoes a certain reaction, situations such as generating a fluorescence signal, enhancing the fluorescence signal, or attenuating the fluorescence signal may occur. In the embodiments of the present application, based on the initial optical parameter of the laser that excites the biological sample to generate a fluorescence signal, the fluorescence signal is collected after the reaction, and the brightness value of the fluorescence signal of the biological sample under the initial optical parameter is acquired. It should be understood that this method is applicable for situations where the biological sample undergoes multiple reactions and the fluorescence signal of solid carrier during each reaction is collected separately. Specifically, the optical parameter (i.e., the first optical parameter) used for subsequent reactions is determined based on the fluorescence signal and the corresponding parameter obtained during the first reaction or first few reactions. This ensures that in subsequent reactions, the laser directly uses the optical parameter to perform microscopic optical imaging on the fluorescence signal generated by the biological sample, obtaining an image with preset standard brightness. This approach can reduce the influence of various factors affecting fluorescence signal stability in the microscopic imaging process, thereby improving the judgment of data obtained from the images from the imaging process and enhancing the accuracy of the data reflected by the images.

The embodiments of the present application do not strictly limit the type of reaction. In some embodiments, the first reaction is one of the first N reactions performed on the biological sample. That is, the first reaction refers to the first reaction or first few reactions when a biomolecule undergoes multiple reactions, and the fluorescence signal from the solid carrier is collected separately during each reaction. Thus, by conducting the first few reactions on the biological sample, the first brightness value corresponding to the first fluorescence signal obtained under the initial optical parameter condition during the reaction is determined, thereby saving time in determining the first optical parameter. In some embodiments, the value of N ranges from 1 to 5. Exemplarily, N is 1, 2, 3, 4, or 5 in specific scenarios. Exemplarily, the biological sample is a nucleic acid molecule, and the microscopic imaging method is used for fluorescence signal collection during the sequencing of nucleic acid molecules. In this case, the first reaction corresponds to the sequencing reaction, specifically the first cycle of sequencing reaction or the first few cycles of sequencing reactions.

In the embodiments of the present application, the initial optical parameter refers to the starting value of the optical parameter at the beginning of the reaction. In the context of the embodiments of the present application, the initial optical parameter refers to the optical parameter during the first reaction or the first few reactions when the biological sample undergoes multiple reactions. Taking the example where the biological sample is the nucleic acid molecule and the reaction is a base extension reaction, the initial optical parameter refers to the optical parameter during the first cycle of base extension reaction or the first few cycles of base extension reactions involving the nucleic acid molecules. In some embodiments, the calculation formula for the initial optical parameter is: Initial Optical Parameter = A × b, where A represents the initial laser power, the initial laser irradiation time, or the initial laser parameter determined based on the initial laser power and the initial laser irradiation time of the laser; b represents the ratio of the quality-control optical parameter to the average optical parameter of the solid carrier. A is determined based on the optical settings of the instrument. Depending on the type of A, the quality-control optical parameter of the solid carrier may be the quality-control laser power, the quality control laser irradiation time, or the quality control laser parameter determined based on the quality-control laser power and quality control laser irradiation time. As for b, there is a correspondence between the quality-control optical parameter and the average optical parameter. Exemplarily, the quality-control optical parameter is the quality-control laser power, and the average optical parameter is the average laser power; the quality-control optical parameter is the quality control laser irradiation time, and the average optical parameter is the average irradiation time; the quality-control optical parameter is the quality control initial laser parameter, and the average optical parameter is the average initial laser parameter. By determining the initial optical parameter through this method, the time spent on trial and error in determining the laser operating parameter for the first reaction is eliminated, thereby reducing the microscopic imaging time.

It should be understood that b is determined by the properties of the solid carrier and the settings of the instrument and generally falls within a specific range of values. Exemplarily, if the average laser power of the solid carrier is 500 mW and the quality-control laser power is 650 mW, then b is 650/500 = 1.3. Exemplarily, taking the example where the instrument is a sequencer, the initial power of the laser in the sequencer is set to 550 mW at the factory (i.e., A is 550 mW), and b is 1.3. From this, the initial optical parameter can be calculated as: Initial Optical Parameter = 1.3 × *550* = 715 mW.

Taking the example where the biological sample is the nucleic acid molecule and the reaction is a sequencing reaction for the nucleic acid molecule, the average laser power and the quality-control laser power can be set as follows: Based on a preset brightness value range, the optical parameters are adjusted such that the brightness value range of the fluorescence signals in the imaging is achieved for most sequencers, solid carriers, and reagent batches used for the reaction, thereby determining the mean optical parameter. The quality-control laser power is set based on the mean optical parameter and serves as the basis for calibrating other sequencers and other batches of solid carriers. Through multiple and amplified verifications of the sequencers and solid carriers, the final average laser power is adjusted and obtained.

In some embodiments, the step of performing the first reaction on the biological sample based on the initial optical parameter, collecting the first fluorescence signal on the surface of the solid carrier after the first reaction, and determining the first brightness value of the first fluorescence signal in at least part of the region on the solid carrier includes: performing the first reaction on the biomolecules to generate the first fluorescence signal, collecting the image of at least one FOV on the surface of the solid carrier where the first reaction occurred, estimating the average brightness value based on the brightness value of bright spots in the image, and outputting the average brightness value as the first brightness value. In this embodiment, the estimation of the average brightness value may be based on the image of at least one FOV on the surface of the solid carrier where the first reaction occurred. This includes the situation where the estimation of the average brightness value is based on one FOV on the surface of the solid carrier where the first reaction occurred (in this case, the image used for estimating the average brightness is collected from one FOV), the situation where the estimation of the average brightness value is based on a plurality of FOVs on the surface of the solid carrier where the first reaction occurred (in this case, the image used for estimating the average brightness is collected from multiple FOVs), and the situation where the estimation of the average brightness value is based on all FOVs on the surface of the solid carrier where the first reaction occurred (in this case, the image used for estimating the average brightness is collected from all FOVs).

According to the embodiments of the present application, the images used to estimate the average brightness value can originate from a single first reaction or from the first few reactions out of multiple reactions. The range of the selected fluorescent images is not strictly limited; a small region of the solid carrier may be selected for analysis. Theoretically, it is also possible to select multiple regions on the surface of the solid carrier where the first reaction occurred or even the entire solid carrier for analysis. However, it should be understood that the larger the selected region range, the longer the corresponding data processing time will be. The range of a small region is not strictly limited, as long as the small region contains statistically sufficient data points, for example, over 10,000 data points. Exemplarily, taking the example where the reaction is a base extension reaction, the first brightness value may originate from the first brightness value in fluorescent images of different FOVs obtained during the same cycle of base extension reaction (e.g., the first cycle). the first brightness value may also originate from the first brightness value in fluorescent images of the same FOV obtained from different cycles of base extension reactions during the first few cycles of base extension reactions. the first brightness value may further originate from the first brightness value in fluorescent images of different FOVs obtained from different cycles of base extension reactions during the first few cycles of base extension reactions. In some embodiments, the CV value of the first brightness value across different regions of the solid carrier is less than or equal to 5%, allowing for the random selection of regions and the obtaining of quality data.

In some embodiments, the biomolecules are nucleic acid molecules, and the first reaction is a base extension reaction. In this case, the method for estimating the average brightness value based on the brightness value of bright spots in the image follows the standard sequencing workflow. This estimation is completed by reading data from a small region on the sequencing chip during the first cycle of sequencing reaction or the first few cycles of sequencing reactions. When estimating brightness value, the fluorescence brightness value and background values from each camera can be read separately, simplifying the algorithm to save time and computational resources. Alternatively, the standard image processing-base calling (basecall) software of the sequencer can be used to calculate more accurate sequencing brightness value (patent application CN 112289377 A).

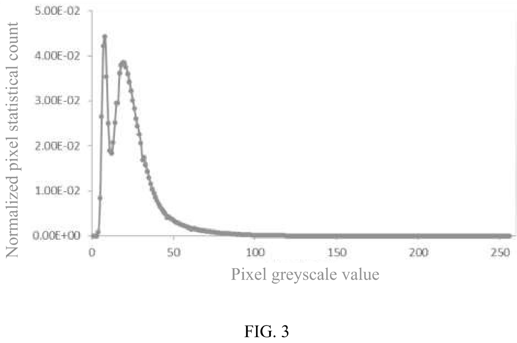

In some embodiments, the biomolecules are nucleic acid molecules, and the first reaction is a base extension reaction. In this case, the method for estimating the average brightness value based on the brightness value of bright spots in the image includes: identifying signal peaks and background peaks based on the images of a plurality of base channels in one FOV; fitting the greyscale values of all pixels in the image based on the signal peaks and the background peaks to determine the signal-peak distribution curve and the background-peak distribution curve; and determining the average brightness value based on the signal-peak distribution curve and the background-peak distribution curve (FIG. 3).

In one embodiment, determining the sequencing average brightness value based on the signal-peak distribution curve and the background-peak distribution curve includes: determining the median value of the signal peaks based on the signal-peak distribution curve; determining the median value of the background peaks based on the background-peak distribution curve; and determining the difference value between the median value of the signal peaks and the median value of the background peaks, and using the difference value as the average brightness value .

In some embodiments, the signal brightness during sequencing can be influenced by the following factors: laser power, exposure time, the light transmission efficiency of the optical system, the quality of the filter, the purity of fluorescent bases in the chemical reagent, phasing and optical damage during sequencing, the fluorescence background of the chip, the amplification factor of the amplification cluster on the chip, and the like. Among these, the first two factors-laser power and exposure time-generally have relatively broad adjustment ranges. The two factors can be adjusted through sequencing experiments to establish a brightness-power function and a brightness-exposure time function, which serve as the basis for optical adjustments.

In step S120, the preset standard brightness is a preset standard brightness value range, which can be understood as the preset brightness that allows effective identification of each signal site in the image when performing microscopic imaging processing on the biological sample on the surface of the solid carrier.

According to the embodiments of the present application, it is judged whether the first brightness value meets the preset brightness standard by comparing the first brightness value with the preset standard brightness. The judgment criterion is whether the first brightness value falls within the preset standard brightness value range. Based on the judgment result, there are two situations:
In the first situation, the first brightness value is compared with the preset standard brightness, and if the first brightness value falls within the preset standard brightness value range, it is determined that the first brightness value meets the preset brightness standard. In this case, the corresponding judgment result is "yes", and the initial optical parameter is determined to be the first optical parameter. In subsequent reactions involving the biological sample, the first optical parameter is consistently used as the operating parameter for the laser.

In this situation, after the step of determining the first optical parameter, further included is: recording and storing the first optical parameter. Moreover, during subsequent similar reactions involving the biological sample, the first optical parameter is directly invoked as the operating parameter for the laser. This ensures that microscopic imaging can still carry out the reaction using the determined first optical parameter despite the presence of various factors affecting performance, and that the fluorescent images collected achieve the required brightness.

In the second situation, the first brightness value is compared with the preset standard brightness, and if the first brightness value does not fall within the preset standard brightness value range, it is determined that the first brightness value does not meet the standard. The corresponding judgment result is "no". In this case, the following processing is required:
(i) Adjust the initial optical parameter based on a preset function to determine a second optical parameter that meets the preset standard brightness in the preset function.

In this step, the preset function is a function established based on the second brightness of the second fluorescence signal in at least part of the region of the solid carrier and a third optical parameter when the biological sample undergoes a second reaction to generate the second fluorescence signal. It should be understood that the type of the third optical parameter corresponds to that of the first optical parameter. For example, if the first optical parameter is laser power, the third optical parameter is also laser power; if the first optical parameter is laser irradiation time, the third optical parameter is also laser irradiation time; if the first optical parameter is an associated parameter formed by laser power and laser irradiation time (i.e., a preset laser power-laser irradiation time array), the third optical parameter is also an associated parameter formed by laser power and laser irradiation time. Correspondingly, the preset function includes at least one selected from the brightness-laser power function, the brightness-laser irradiation time function, and the brightness-laser power-laser irradiation time function. The brightness-laser power function represents a functional relationship established based on the brightness and laser power. The brightness-laser irradiation time function represents a functional relationship established based on the brightness and laser irradiation time. The brightness-laser power-laser irradiation time function represents a functional relationship established based on the brightness, laser power, and laser irradiation time.

In some embodiments, the method for establishing the preset function includes: setting a plurality of different third optical parameters, performing a third reaction based on the different third optical parameters, collecting the third fluorescence signal on the surface of the solid carrier after the third reaction, and determining the second brightness of each second fluorescence signal, the third optical parameters being preset laser power, preset laser irradiation time, or a preset laser power-laser irradiation time array; and performing fitting to obtain the preset function based on the third optical parameters and the second brightness. The number of third optical parameters is not strictly limited, and the value of the third optical parameter may be the same as or different from the value of the first optical parameter. The third reaction is of the same type as the first reaction but differs in the number of cycles. Exemplarily, the biological sample is a nucleic acid molecule, and the reaction is a base extension reaction. The first reaction may be the first cycle of base extension reaction performed on the nucleic acid molecules, and the third reaction is a base extension reaction performed on the nucleic acid molecules after the first cycle of base extension reaction. Depending on the number of third optical parameters, the number of cycles of base extension reactions performed after the third base extension reaction will differ. After each third reaction, the third fluorescence signal on the surface of the solid carrier is collected, and one fluorescent image can be obtained. Using multiple sets of third optical parameters and the corresponding second brightness value of the third fluorescence signal obtained from third reactions based on the third optical parameters, a fitting process is performed to obtain the preset function.

According to the embodiments of the present application, after determining the preset function, the second optical parameter can be obtained by adjusting the initial optical parameter based on the expected brightness during the reaction of the biological sample, i.e., the preset standard brightness. In some embodiments, the step of adjusting the initial optical parameter based on the preset function to determine the second optical parameter includes: determining a fourth optical parameter based on the preset function and the preset standard brightness; and adjusting the initial optical parameter to the fourth optical parameter and determining the fourth optical parameter as the second optical parameter. Exemplarily, the biological sample is a nucleic acid molecule, the reaction is a base extension reaction, and the preset standard brightness is a preset brightness value range for the bases that meet the requirements for base calling.
(ii) Replace the initial optical parameter with the second optical parameter and repeat steps S110 and S 120 until the brightness value meets the preset brightness standard, thereby determining the first optical parameter.

In this step, after confirming the second optical parameter, the second optical parameter is used as the initial optical parameter to repeat steps S110 and S120, adjusting the optical parameter until the first optical parameter with brightness value meeting the standard is obtained.

In the process of repeating steps (i) and (ii), the dual factors of the first brightness value image in each step (i) can come from multiple situations. In some embodiments, the first brightness value is derived from the first brightness value of different FOVs in an image generated by the same instance of the first reaction. In some embodiments, the first brightness value is derived from the first brightness value of the same FOV from different instances of the first reaction. In some embodiments, the first brightness value is derived from the first brightness value of different FOVs from different instances of the first reaction.

In some embodiments, the biological sample is a nucleic acid molecule, the first reaction is a base extension reaction, and the number of repetitions of steps (i) and (ii) is less than or equal to three. This can prevent issues such as contamination, leakage, or "screen cracking" in some solid carriers during sequencing, which could result in abnormal brightness data that cannot be used properly. According to some more specific embodiments of the present application, the present application provides a method for adjusting the first optical parameter during sequencing, as shown in FIG. 2. The method includes the following steps.

In S110, a first cycle of base extension reaction is conducted on target nucleic acid molecules on the surface of a sequencing chip, fluorescence signals are collected from the surface of the sequencing chip after the first cycle of base extension reaction to acquire fluorescence imaging, and the sequencing brightness is estimated.

In S1201, software is controlled to judge whether the sequencing brightness value meets the preset brightness standard. The preset brightness standard is generally a range. If the quality of the sequencing image within this range meets the base calling requirements, the sequencing brightness is considered as meeting the preset brightness standard, and a sequencing step is carried out; otherwise, proceed to step S1202.

In S1202, the laser power, exposure time value, or dual adjustment value for brightness-exposure time, which can bring the brightness into the target range, is calculated based on a preset function. In S1203, the laser power, exposure time, or dual adjustment of brightness-exposure time is adjusted.

In S1204, imaging is performed on the chip again according to a new parameter, and the sequencing brightness value is estimated. Re-imaging can be performed at another location on the sequencing chip to prevent fluorescence quenching from the first imaging.

In S1205, steps S1202 to S1204 are repeated until the sequencing brightness value meets the preset brightness standard. At most three loops can be set to prevent some chips from experiencing other failures, such as reagent leakage leading to repeated imaging failures.

Sequencing is conducted according to the sequencing optical parameter that meets the preset brightness standard. If sequencing is a one-time quality control process and sequencing is successfully completed, the used first optical parameter is output, and the optical parameter information is written into the QR code of the chip.

According to some more specific embodiments of the present application, during sequencing, the optical parameter information carried by the chip or reagent kit is read once brightness value meets the preset brightness standard. The optical parameter information is multiplied by the initial optical parameter of the sequencer to obtain the initial optical parameter at the start of sequencing. For example, if the factory power of the sequencer is 550 mW and the optical parameter information is 1.3, the obtained initial optical parameter would be 715 mW. Starting the sequencing with the initial optical parameter can save the sequencing adaptive time. The sequencing adaptive time referred to in the embodiments of the present application is the time required for the instrument to reach the specific sequencing brightness that meets the requirements.

According to some specific embodiments of the present application, the calculation of estimated brightness value during sequencing involves signal localization, calculating the statistical median value of the signal region, setting the background region, calculating the statistical median value of the signal region, signal minus background, and taking the median value of the sequencing brightness within the FOV. Estimating sequencing brightness imposes no requirements on the sequencing process. By reading data from a small region on the sequencing chip, such as one FOV, during the first or the first few cycles of reactions, the brightness values from the first or first few cycles of reactions can be used to estimate the brightness for subsequent sequencing cycles. According to some more specific embodiments of the present application, in the method steps S1201 and S1205, it is judged whether the brightness value of each base falls within a preset standard brightness value range. For example, the preset brightness value range for the A-base is 60 to 100. The base calling requirement refers to the requirements for the brightness values of four bases: for example, A-base 60 to 100; and T-base 60 to 100. According to historical data, within such brightness value ranges, the statistical probability of the base calling error rate in subsequent sequencing cycles being lower than 0.5% is higher than 99.9%.

According to some embodiments of the present application, the brightness CV value of the sequencing chip used in the present application is less than 5%, thereby improving the brightness uniformity across different regions of the sequencing chip surface and the uniformity of optical elements.

Typically, the optical performance of sequencing chips and reagents within the same batch is similar, while sequencing brightness fluctuations may occur between different batches of sequencing chips and reagents. Therefore, the optical parameters used in the quality control of sequencing chips and reagents can be recorded, and these "first optical parameters" are stored in the form of a QR code or similar means in the product information of the reagent kit. In this way, according to the method provided by the embodiments of the present application, during the sequencing process, users can immediately select the first optical parameter that passed quality control for this batch based on the information from reading the QR code. This method reduces the procedure of repeatedly adjusting to obtain appropriate laser power and/or laser irradiation time, thereby saving sequencing time.

### Microscopic Imaging Apparatus

According to some embodiments of the present application, the present application provides a microscopic imaging apparatus, which includes a laser and a first optical parameter determination system. The first optical parameter determination system is configured to determine the first optical parameter when performing microscopic imaging processing on the biological sample on the surface of a solid carrier; the first optical parameter is the laser power and/or laser time that meets the preset brightness standard.

According to some embodiments of the present application, the present application provides a first optical parameter determination system. The system includes:
a first brightness determination unit, configured to perform a first reaction on the biological sample based on the initial optical parameter, collect a first fluorescence signal on the surface of the solid carrier after the first reaction, and determine the first brightness value of the first fluorescence signal in at least part of the region of the solid carrier; and
a first brightness judgment unit, configured to judge whether the first brightness value meets the preset brightness standard by comparing the first brightness value with a preset standard brightness.

If yes, then the initial optical parameter is determined as the first optical parameter.

If no, then the initial optical parameter is adjusted based on a preset function to determine a second optical parameter that meets the preset standard brightness in the preset function; the first brightness value determination unit and the first brightness value judgment unit are repeated with the second optical parameter replacing the initial optical parameter until the brightness meets the preset brightness standard, thereby determining the first optical parameter.

The preset function is a function established based on the second brightness of the second fluorescence signal in at least part of the region of the solid carrier and a third optical parameter during the collection of the second fluorescence signal on the surface of the solid carrier after the biological sample undergoes a second reaction. The second optical parameter is the second laser power and/or the second laser irradiation time.

In the first brightness value determination unit, after the biological sample undergoes a certain reaction, situations such as generating a fluorescence signal, enhancing the fluorescence signal, or attenuating the fluorescence signal may occur. In the embodiments of the present application, based on the initial optical parameter of the laser that excites the biological sample to generate a fluorescence signal, the fluorescence signal is collected after the reaction, and the brightness value of the fluorescence signal of the biological sample under the initial optical parameter is acquired. It should be understood that this apparatus is applicable for situations where the biological sample undergoes multiple reactions and the fluorescence signal of solid carrier during each reaction is collected separately. Specifically, the optical parameter (i.e., the first optical parameter) used for subsequent reactions is determined based on the fluorescence signal and the corresponding parameter obtained during the first reaction or first few reactions. This ensures that in subsequent reactions, the laser directly uses the optical parameter to perform microscopic optical imaging on the fluorescence signal generated by the biological sample, obtaining an image with preset standard brightness. This approach can reduce the influence of various factors affecting fluorescence signal stability in the microscopic imaging process, thereby improving the judgment of data obtained from the images from the imaging process and enhancing the accuracy of the data reflected by the images.

The embodiments of the present application do not strictly limit the type of reaction. In some embodiments, the first reaction is one of the first N reactions performed on the biological sample. That is, the first reaction refers to the first reaction or first few reactions when a biomolecule undergoes multiple reactions, and the fluorescence signal from the solid carrier is collected separately during each reaction. Thus, by conducting the first few reactions on the biological sample, the first brightness value corresponding to the first fluorescence signal obtained under the initial optical parameter condition during the reaction is determined, thereby saving time in determining the first optical parameter. In some embodiments, the value of N ranges from 1 to 5. Exemplarily, N is 1, 2, 3, 4, or 5 in specific scenarios. Exemplarily, the biological sample is a nucleic acid molecule, and the microscopic imaging method is used for fluorescence signal collection during the sequencing of nucleic acid molecules. In this case, the first reaction corresponds to the sequencing reaction, specifically the first cycle of sequencing reaction or the first few cycles of sequencing reactions.

In the embodiments of the present application, the initial optical parameter refers to the starting value of the optical parameter at the beginning of the reaction. In the context of the embodiments of the present application, the initial optical parameter refers to the optical parameter during the first reaction or the first few reactions when the biological sample undergoes multiple reactions. Taking the example where the biological sample is the nucleic acid molecule and the reaction is a sequencing reaction, the initial optical parameter refers to the optical parameter during the first cycle of sequencing or the first few cycles of sequencing involving the nucleic acid molecules. In some embodiments, the calculation formula for the initial optical parameter is: Initial Optical Parameter = A × b, where A represents the initial laser power, the initial laser irradiation time, or the initial laser parameter determined based on the initial laser power and the initial laser irradiation time of the laser; b represents the ratio of the quality-control optical parameter to the average optical parameter of the solid carrier. A is determined based on the optical settings of the instrument. Depending on the type of A, the quality-control optical parameter of the solid carrier may be the quality-control laser power, the quality control laser irradiation time, or the quality control laser parameter determined based on the quality-control laser power and quality control laser irradiation time. As for b, there is a correspondence between the quality-control optical parameter and the average optical parameter. Exemplarily, the quality-control optical parameter is the quality-control laser power, and the average optical parameter is the average laser power; the quality-control optical parameter is the quality control laser irradiation time, and the average optical parameter is the average irradiation time; the quality-control optical parameter is the quality control initial laser parameter, and the average optical parameter is the average initial laser parameter. By determining the initial optical parameter through this method, the time spent on trial and error in determining the laser operating parameter for the first reaction is eliminated, thereby reducing the microscopic imaging time.

It should be understood that b is determined by the properties of the solid carrier and the settings of the instrument and generally falls within a specific range of values. Exemplarily, if the average laser power of the solid carrier is 500 mW and the quality-control laser power is 650 mW, then b is 650/500 = 1.3. Exemplarily, taking the example where the instrument is a sequencer, the initial power of the laser in the sequencer is set to 550 mW at the factory (i.e., A is 550 mW), and b is 1.3. From this, the initial optical parameter can be calculated as: Initial Optical Parameter = 1.3 × *550 = 715* mW.

Taking the example where the biological sample is the nucleic acid molecule and the reaction is a sequencing reaction for the nucleic acid molecule, the average laser power and the quality-control laser power can be set as follows: Based on a preset brightness value range, the optical parameters are adjusted such that the brightness value range of the fluorescence signals in the imaging is achieved for most sequencers, solid carriers, and reagent batches used for the reaction, thereby determining the mean optical parameter. The quality-control laser power is set based on the mean optical parameter and serves as the basis for calibrating other sequencers and other batches of solid carriers. Through multiple and amplified verifications of the sequencers and solid carriers, the final average laser power is adjusted and obtained.

In some embodiments, the step of performing the first reaction on the biological sample based on the initial optical parameter, collecting the first fluorescence signal on the surface of the solid carrier after the first reaction, and determining the first brightness value of the first fluorescence signal in at least part of the region on the solid carrier includes: performing the first reaction on the biomolecules to generate the first fluorescence signal, collecting the image of at least one FOV on the surface of the solid carrier where the first reaction occurred, estimating the average brightness value based on the brightness value of bright spots in the image, and outputting the average brightness value as the first brightness value. In this embodiment, the estimation of the average brightness value may be based on the image of at least one FOV on the surface of the solid carrier where the first reaction occurred. This includes the situation where the estimation of the average brightness value is based on one FOV on the surface of the solid carrier where the first reaction occurred (in this case, the image used for estimating the average brightness value is collected from one FOV), the situation where the estimation of the average brightness is based on a plurality of FOVs on the surface of the solid carrier where the first reaction occurred (in this case, the image used for estimating the average brightness is collected from multiple FOVs), and the situation where the estimation of the average brightness value is based on all FOVs on the surface of the solid carrier where the first reaction occurred (in this case, the image used for estimating the average brightness is collected from all FOVs).

According to the embodiments of the present application, the images used to estimate the average brightness value can originate from a single first reaction or from the first few reactions out of multiple reactions. The range of the selected fluorescent images is not strictly limited; a small region of the solid carrier may be selected for analysis. Theoretically, it is also possible to select multiple regions on the surface of the solid carrier where the first reaction occurred or even the entire solid carrier for analysis. However, it should be understood that the larger the selected region range, the longer the corresponding data processing time will be. The range of a small region is not strictly limited, as long as the small region contains statistically sufficient data points, for example, over 10,000 date points. Exemplarily, taking the example where the reaction is a sequencing reaction, the first brightness value may originate from the first brightness value in fluorescent images of different FOVs obtained during the same cycle of sequencing (e.g., the first cycle). the first brightness value may also originate from the first brightness value in fluorescent images of the same FOV obtained from different cycles of sequencing during the first few cycles of sequencing. the first brightness value may further originate from the first brightness value in fluorescent images of different FOVs obtained from different cycles of sequencing during the first few cycles of sequencing. In some embodiments, the CV value of the first brightness value across different regions of the solid carrier is less than or equal to 5%, allowing for the random selection of regions and the obtaining of quality data.

In some embodiments, the biomolecules are nucleic acid molecules, and the first reaction is a base extension reaction. In this case, the method for estimating the average brightness value based on the brightness value of bright spots in the image follows the standard sequencing workflow. This estimation is completed by reading data from a small region on the sequencing chip during the first cycle of sequencing reaction or the first few cycles of sequencing reactions. When estimating brightness value , the fluorescence brightness value and background values from each camera can be read separately, simplifying the algorithm to save time and computational resources. Alternatively, the standard image processing-base calling (basecall) software of the sequencer can be used to calculate more accurate sequencing brightness value (patent application CN 112289377 A).

In some embodiments, the biomolecules are nucleic acid molecules, and the first reaction is a sequencing reaction. In this case, the method for estimating the average brightness value based on the brightness value of bright spots in the image includes: identifying signal peaks and background peaks based on the images of a plurality of base channels in one FOV; fitting the greyscale values of all pixels in the image based on the signal peaks and the background peaks to determine the signal-peak distribution curve and the background-peak distribution curve; and determining the average brightness value based on the signal-peak distribution curve and the background-peak distribution curve (FIG. 3).

In one embodiment, determining the sequencing average brightness value based on the signal-peak distribution curve and the background-peak distribution curve includes: determining the median value of the signal peaks based on the signal-peak distribution curve; determining the median value of the background peaks based on the background-peak distribution curve; and determining the difference value between the median value of the signal peaks and the median value of the background peaks, and using the difference value as the average brightness value .

In some embodiments, the signal brightness during sequencing can be influenced by the following factors: laser power, exposure time, the light transmission efficiency of the optical system, the quality of the filter, the purity of fluorescent bases in the chemical reagent, phasing and optical damage during sequencing, the fluorescence background of the chip, the amplification factor of the amplification cluster on the chip, and the like. Among these, the first two factors-laser power and exposure time-generally have relatively broad adjustment ranges. The two factors can be adjusted through sequencing experiments to establish a brightness-power function and a brightness-exposure time function, which serve as the basis for optical adjustments.

In the first brightness value judgment unit, the preset standard brightness is a preset standard brightness value range, which can be understood as the preset brightness that allows effective identification of each signal site in the image when performing microscopic imaging processing on the biological sample on the surface of the solid carrier.

According to the embodiments of the present application, it is judged whether the first brightness value meets the preset brightness standard by comparing the first brightness value with the preset standard brightness. The judgment criterion is whether the first brightness value falls within the preset standard brightness value range. Based on the judgment result, there are two situations:
In the first situation, the first brightness value is compared with the preset standard brightness, and if the first brightness value falls within the preset standard brightness value range, it is determined that the first brightness value meets the preset brightness standard. In this case, the corresponding judgment result is "yes", and the initial optical parameter is determined to be the first optical parameter. In subsequent reactions involving the biological sample, the first optical parameter is consistently used as the operating parameter for the laser.

In this situation, after the step of determining the first optical parameter , further included is: recording and storing the first optical parameter. Moreover, during subsequent similar reactions involving the biological sample, the first optical parameter is directly invoked as the operating parameter for the laser. This ensures that microscopic imaging can still carry out the reaction using the determined first optical parameter despite the presence of various factors affecting performance, and that the fluorescent images collected achieve the required brightness.

In the second situation, the first brightness value is compared with the preset standard brightness, and if the first brightness value does not fall within the preset standard brightness value range, it is determined that the first brightness value does not meet the standard. The corresponding judgment result is "no". In this case, the following processing is required:
(i) Adjust the initial optical parameter based on a preset function to determine a second optical parameter that meets the preset standard brightness in the preset function.

In this step, the preset function is a function established based on the second brightness of the second fluorescence signal in at least part of the region of the solid carrier and a third optical parameter when the biomolecules undergo a second reaction to generate the second fluorescence signal. It should be understood that the type of the third optical parameter corresponds to that of the first optical parameter. For example, if the first optical parameter is laser power, the third optical parameter is also laser power; if the first optical parameter is laser irradiation time, the third optical parameter is also laser irradiation time; if the first optical parameter is an associated parameter formed by laser power and laser irradiation time (i.e., a preset laser power-laser irradiation time array), the third optical parameter is also an associated parameter formed by laser power and laser irradiation time. Correspondingly, the preset function includes at least one selected from the brightness-laser power function, the brightness-laser irradiation time function, and the brightness-laser power-laser irradiation time function. The brightness-laser power function represents a functional relationship established based on the brightness and laser power. The brightness-laser irradiation time function represents a functional relationship established based on the brightness and laser irradiation time. The brightness-laser power-laser irradiation time function represents a functional relationship established based on the brightness, laser power, and laser irradiation time.

In some embodiments, the method for establishing the preset function includes: setting a plurality of different third optical parameters, performing a third reaction based on the different third optical parameters, collecting the third fluorescence signal on the surface of the solid carrier after the third reaction, and determining the second brightness of each second fluorescence signal, the third optical parameters being preset laser power, preset laser irradiation time, or a preset laser power-laser irradiation time array; and performing fitting to obtain the preset function based on the third optical parameters and the second brightness. The number of third optical parameters is not strictly limited, and the value of the third optical parameter may be the same as or different from the value of the first optical parameter. The third reaction is of the same type as the first reaction but differs in the number of cycles. Exemplarily, the biological sample is a nucleic acid molecule, and the reaction is a sequencing reaction. The first reaction may be the first cycle of sequencing reaction performed on the nucleic acid molecules, and the third reaction is a sequencing reaction performed on the nucleic acid molecules after the first cycle of sequencing. Depending on the number of third optical parameters, the number of cycles of sequencing reactions performed after the third sequencing reaction will differ. After each third reaction, the third fluorescence signal on the surface of the solid carrier is collected, and one fluorescent image can be obtained. Using multiple sets of third optical parameters and the corresponding second brightness value of the third fluorescence signal obtained from third reactions based on the third optical parameters, a fitting process is performed to obtain the preset function.

According to the embodiments of the present application, after determining the preset function, the second optical parameter can be obtained by adjusting the initial optical parameter based on the expected brightness during the reaction of the biological sample, i.e., the preset standard brightness. In some embodiments, the step of adjusting the initial optical parameter based on the preset function to determine the second optical parameter includes: determining a fourth optical parameter based on the preset function and the preset standard brightness; and adjusting the initial optical parameter to the fourth optical parameter and determining the fourth optical parameter as the second optical parameter. Exemplarily, the biological sample is a nucleic acid molecule, the reaction is a sequencing reaction, and the preset standard brightness is a preset brightness value range for the bases that meet the requirements for base calling.
(ii) Replace the initial optical parameter with the second optical parameter and repeat the first brightness value determination unit and the first brightness value judgment unit until the brightness value meets the preset brightness standard, thereby determining the first optical parameter.

In this step, after confirming the second optical parameter, the second optical parameter is used as the initial optical parameter to repeat the first brightness value determination unit and the first brightness value judgment unit, adjusting the optical parameter until the first optical parameter with brightness meeting the standard is obtained.

In the process of repeating steps (i) and (ii), the dual factors of the first brightness value image in each step (i) can come from multiple situations. In some embodiments, the first brightness value is derived from the first brightness value of different FOVs in an image generated by the same instance of the first reaction. In some embodiments, the first brightness value is derived from the first brightness value of the same FOV from different instances of the first reaction. In some embodiments, the first brightness value is derived from the first brightness value of different FOVs from different instances of the first reaction.

In some embodiments, the biological sample is a nucleic acid molecule, the first reaction is a sequencing reaction, and the number of repetitions of the first brightness value determination unit and first brightness judgment unit is less than or equal to three. This can prevent issues such as contamination, leakage, or "screen cracking" in some solid carriers during sequencing, which could result in abnormal brightness data that cannot be used properly.

According to some specific embodiments of the present application, the calculation of estimated brightness value during sequencing involves signal localization, calculating the statistical median value of the signal region, setting the background region, calculating the statistical median value of the signal region, signal minus background, and taking the median value of the sequencing brightness within the FOV. Estimating sequencing brightness imposes no requirements on the sequencing process. By reading data from a small region on the sequencing chip, such as one FOV, during the first or the first few cycles of reactions, the brightness values from the first or first few cycles of reactions can be used to estimate the brightness for subsequent sequencing cycles. According to some more specific embodiments of the present application, it is judged whether the brightness of value each base falls within a preset standard brightness value range. For example, the preset brightness value range for the A-base is 60 to 100. The base calling requirement refers to the requirements for the brightness values of four bases: for example, A-base 60 to 100; and T-base 60 to 100. According to historical data, within such brightness value ranges, the statistical probability of the base calling error rate in subsequent sequencing cycles being lower than 0.5% is higher than 99.9%.

According to some embodiments of the present application, the brightness CV value of the sequencing chip used in the present application is less than 5%, thereby improving the brightness uniformity across different regions of the sequencing chip surface and the uniformity of optical elements.

The solution of the present disclosure will be explained with reference to the following examples.

It will be understood by those skilled in the art that the following examples are illustrative of the present disclosure only and should not be interpreted as limiting the scope of the present disclosure. The examples without a specified particular technique or condition are performed in accordance with techniques or conditions described in the literature in the art or in accordance with the product specification. Reagents or instruments without specified manufacturers used herein are conventional products that are commercially available.

### Example 1: Brightness Control Function

### 1. Changing sequencing brightness values by altering laser power during sequencing

The experiment utilized three GenoLab sequencers and two sequencing chips (labeled as Chip 1 and Chip 2). Different laser powers (including the standard power, as well as powers obtained by increasing or decreasing the standard power by a certain percentage) were used to perform one cycle of sequencing. Table 1 below shows the laser powers used for sequencing the two chips.

**Table 1**

| Chip | cycle1 power | cycle2 power | cycle3 power | cycle4 power | cycle5 power | cycle6 power |
|---|---|---|---|---|---|---|
| Chip 1 | Reduced by 40% | Reduced by 20% | Standard Power | Increased by 20% | Increased by 40% | Increased by 60% |
| Chip 2 | Reduced by 40% | Reduced by 20% | Standard Power | Increased by 20% | Increased by 40% | Increased by 60% |

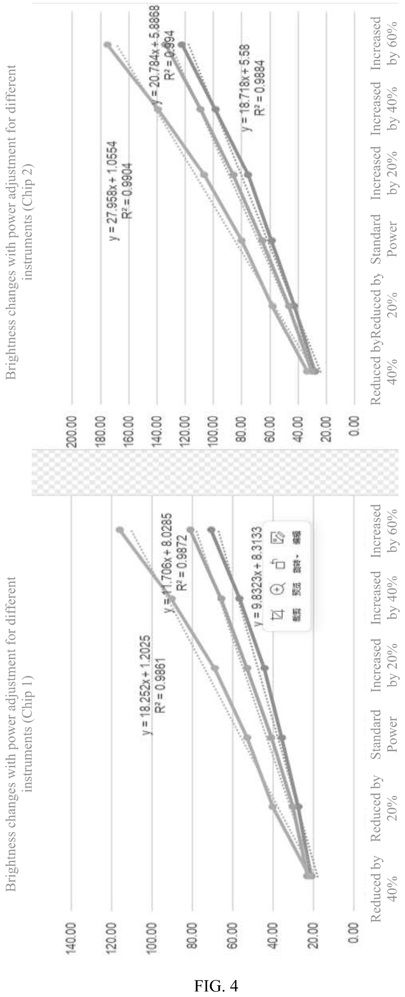

As shown in FIG. 4, the standard image processing-base calling software was used to collect and plot the sequencing brightness values(refer to patent application CN 112289377 A). The horizontal axis represents the sequencing laser power, and the vertical axis represents the sequencing signal brightness value. The left graph shows the brightness value variation fitting curve for Chip 1 under different power conditions across three sequencers, and the right graph shows the brightness value variation fitting curve for Chip 1 under different power conditions across three sequencers, with three curves corresponding to the three sequencers. FIG. 4 shows that the laser power-sequencing brightness exhibits a linear functional relationship. Hence, it is evident that the method for determining the first optical parameter according to the embodiments of the present application is feasible.

### 2. Changing sequencing brightness values through continuous adjustment of optical parameters for each cycle during sequencing

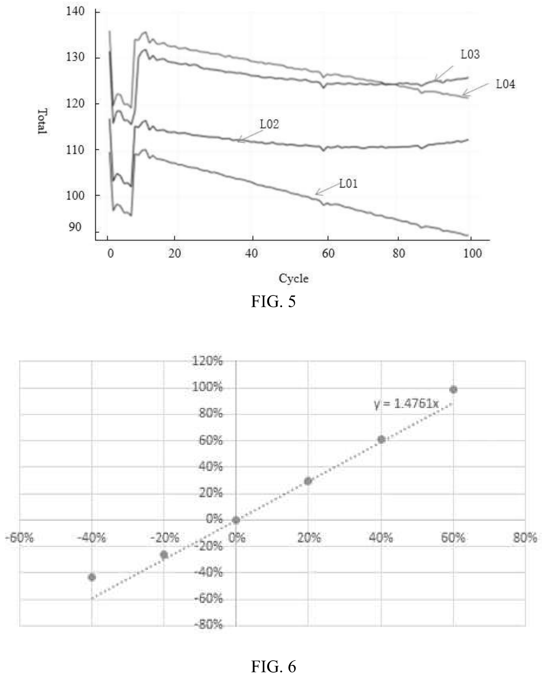

FIG. 5 shows the sequencing brightness curve generated under different laser power conditions. The horizontal axis represents the number of sequencing cycles, and the vertical axis represents the sequencing signal brightness (Total: the sum of the brightness of four bases). L01 represents the brightness-cycle curve without any laser power adjustment, where the laser power corresponding to L01 is constant (green laser at 515 mW, red laser at 440 mW). As shown in the figure, sequencing brightness decreases as the number of sequencing cycles increases, reflecting sequencing signal loss caused by issues such as phasing, and photochemical damage during the sequencing. L02 represents the brightness-cycle curve obtained by adjusting the laser power based on the L01 laser power, where the laser power increases by 1.033 mW per cycle according to the function Power = 515 + 1.033 × n (where n represents the cycle number). As shown in the figure, under these conditions, the brightness-cycle curve is essentially flattened, improving the stability of sequencing brightness, which does not decline with the increase in sequencing cycles. Such more stable brightness is beneficial for improving sequencing quality. L03 represents the brightness curve obtained by increasing the laser power by approximately 13% based on the L01 laser power (green laser at 580 mW, red laser at 493 mW). The corresponding brightness is generally about 20% higher than that of L01. L04 represents the brightness-cycle curve obtained by adjusting the laser power based on the green line L03 laser power, where the power increases by 1.033 mW per cycle according to the function Power = 580 + 1.033 × n (where n represents the cycle number). As shown in the figure, under these conditions, the brightness-cycle curve is essentially flattened, improving the stability of sequencing brightness, which does not decline with the increase in sequencing cycles. Such more stable brightness is beneficial for sequencing quality. This experiment demonstrates that adjusting laser power according to a brightness control function can effectively control the sequencing brightness.

### Example 2: Adaptive Adjustment of Laser Power

A 250M sequencing chip was used on a GenoLab sequencer, with an Escherichia coli standard sample subjected to sequencing to generate a brightness control function based on laser power. Specifically, during sequencing, the power of the green laser (532 nm laser) was changed in each cycle: starting from the standard reference power of 515 mW, the power was first reduced by 40% and then progressively increased to 824 mW, while the red laser power remained unchanged. After completing the sequencing, the following data processing was performed:
(1) using the standard image processing-base calling (basecall) software to calculate and extract the A-base signal brightness for each cycle;
(2) taking the mean sequencing luminance under different laser power parameters and calculating the corresponding percentage of brightness relative to 515 nm, the results being shown in Table 2;

**Table 2**

| Green Laser Power | Power Adjustment Percentage | A-Base Brightness | Brightness Response Percentage |
|---|---|---|---|
| 309 | -40% | 23.06 | -44% |
| 412 | -20% | 30.18 | -26% |
| 515 | 0% | 40.87 | 0% |
| 618 | 20% | 52.84 | 29% |
| 721 | 40% | 65.83 | 61% |
| 824 | 60% | 81.22 | 99% |

(3) plotting the brightness response percentage against the power adjustment percentage, as shown in FIG. 6, to determine the linear function y = 1.4761x, where y represents the brightness response percentage and x represents the power adjustment percentage; and
(4) using this function in subsequent sequencing: If the A-base brightness after the first cycle of sequencing does not fall within the threshold range (60 to 100), determine the laser power corresponding to the expected brightness in this function based on the function and the expected brightness, until the laser power that meets the sequencing preset brightness standard is determined. This process is also referred to as the adaptive laser procedure.

Another 250M sequencing chip was used, with an Escherichia coli standard sample subjected to sequencing. In the first cycle of sequencing, the standard power (515 mW) was used, and the A-base signal brightness was subsequently calculated. The calculated signal brightness was outside the threshold range (60 to 100), with a deviation of -73% from the center of the range. According to the function, it is calculated that the laser power should be increased by 50%.

The green laser power of the sequencer was changed to 773 mW (an increase of 50%), and a new cycle of sequencing was performed. The standard image processing-base calling (basecall) software was used again to calculate and extract the A-base signal brightness for each cycle. The brightness now met the threshold range requirements (60 to 100), as shown in Table 3.

**Table 3**

| Green Laser Power | Power Adjustment Percentage | A-Base Brightness |
|---|---|---|
| 515 | 0% | 46.19 |
| 773 | 50% | 93.81 |

In the description of this specification, references to terms such as "one embodiment", "some embodiments", "example", "specific example", "certain embodiments", or "some examples" are intended to indicate that the specific features, structures, materials, or characteristics described in connection with that embodiment or example are included in at least one embodiment or example of the present application. In the specification, the schematic expression of the terms described above does not necessarily refer to the same embodiment or example. Furthermore, the particular features, structures, materials, or characteristics may be combined in any suitable manner in any one or more embodiments or examples. In addition, in the absence of contradiction, those skilled in the art can combine the different embodiments or examples described in this specification or combine the features of different embodiments or examples.

Although embodiments of the present application have been shown and described above, it would be appreciated by those of ordinary skill in the art that the above embodiments are illustrative, cannot be construed to limit the present disclosure, and changes, alternatives, modifications and variants can be made in the embodiments within the scope of the present disclosure.

## Claims

1. A microscopic imaging method, comprising: performing microscopic imaging processing on a biological sample on a surface of a solid carrier based on an imaging apparatus, wherein the imaging apparatus comprises a laser; the microscopic imaging processing employs the laser to perform microscopic optical imaging on a fluorescence signal generated by the biological sample based on a first optical parameter, and the first optical parameter is laser power and/or laser irradiation time that meets a preset brightness standard.

2. The method according to claim 1, wherein a method for determining the first optical parameter comprises:
(i) performing a first reaction on the biological sample based on an initial optical parameter, collecting a first fluorescence signal on the surface of the solid carrier after the first reaction, and determining a first brightness value of the first fluorescence signal in at least part of a region of the solid carrier; and
(ii) judging whether the first brightness value meets the preset brightness standard by comparing the first brightness value with a preset standard brightness;
if the first brightness value meets the preset standard brightness, setting the initial optical parameters as the first optical parameter; and
if the first brightness value does not meet the preset standard brightness,, adjusting the initial optical parameter based on a preset function so as to determine a second optical parameter that meets the preset standard brightness in the preset function, and replacing the initial optical parameter with the second optical parameter, and repeating steps (i) and (ii) until the brightness value meets the preset brightness standard, thereby determining the optical parameter at that time as the first optical parameter,
wherein the preset function is a function established based on a second brightness value of a second fluorescence signal and a third optical parameter, the second fluorescence signal is collected from at least part of the solid-carrier surface after the biological sample undergoes a second reaction, the third optical parameter is the laser power and/or laser irradiation time used during the collection , and the second optical parameter being second laser power and/or second laser irradiation time.

3. The method according to claim 2, wherein a calculation formula for the initial optical parameter is: Initial Optical Parameter = A × b, wherein A is an initial laser power, an initial laser irradiation time, or an initial laser parameter determined based on the initial laser power and the initial laser irradiation time of the laser; b is a ratio of a quality-control optical parameter to an average optical parameter of the solid carrier, wherein
the quality-control optical parameter is quality-control laser power, and the average optical parameter is average laser power, or
the quality-control optical parameter is a quality control laser irradiation time, and the average optical parameter is an average irradiation time, or
the quality-control optical parameter is a quality control initial laser parameter, and the average optical parameter is an average initial laser parameter.

4. The method according to claim 2, wherein the step of performing the first reaction on the biological sample, collecting the first fluorescence signal on the surface of the solid carrier after the first reaction, and determining the first brightness value of the first fluorescence signal in at least part of the region of the solid carrier comprises:
performing the first reaction on the biological sample, collecting an image of at least one field of view (FOV) where the first reaction occurs on the surface of the solid carrier, estimating average brightness value based on brightness value of each bright spot in the image, and outputting the average brightness value as the first brightness value.

5. The method according to claim 4, wherein the image is collected from an image of one FOV.

6. The method according to claim 4, wherein the first reaction is one of first N reactions performed on the biological sample.

7. The method according to claim 6, wherein a value of N ranges from 1 to 5.

8. The method according to claim 4, wherein a method for estimating the average brightness value based on the brightness value of each bright spot in the image comprises:
identifying signal peaks and background peaks based on images of a plurality of detection channels in one FOV;
fitting greyscale values of all pixels in the image based on the signal peaks and the background peaks to determine a signal-peak distribution curve and a background-peak distribution curve; and
determining the average brightness value based on the signal-peak distribution curve and the background-peak distribution curve.

9. The method according to claim 8, wherein determining the average brightness value based on the signal-peak distribution curve and the background-peak distribution curve comprises:
determining a median value of the signal peaks based on the signal-peak distribution curve;
determining a median value of the background peaks based on the background-peak distribution curve; and
determining a difference between the median value of the signal peaks and the median value of the background peaks, and using the difference as the average brightness.

10. The method according to claim 2, wherein the preset standard brightness is a preset standard brightness value range.

11. The method according to claim 10, wherein judging whether the first brightness value meets the standard by comparing the first brightness value with the preset standard brightness comprises:
comparing the first brightness value with the preset standard brightness, and determining that the first brightness value meets the standard if the first brightness value falls within the preset standard brightness value range;
determining that the first brightness value does not meet the standard if the first brightness value does not fall within the preset standard brightness value range.

12. The method according to any one of claims 1 to 11, wherein the preset function comprises at least one selected from a brightness-laser power function, a brightness-laser irradiation time function, and a brightness-laser power-laser irradiation time function.

13. The method according to claim 2, wherein a method for establishing the preset function comprises:
setting a plurality of different third optical parameters, performing a third reaction based on the different third optical parameters, collecting a third fluorescence signal on the surface of the solid carrier after the third reaction, and determining the second brightness value of each third fluorescence signal, the third optical parameters being preset laser power, preset laser irradiation time, or a preset laser power-laser irradiation time array; and
performing fitting to obtain the preset function based on the third optical parameters and the second brightness.

14. The method according to claim 2, wherein the step of adjusting the initial optical parameter based on the preset function so as to determine the second optical parameter comprises:
determining a fourth optical parameter based on the preset function and the preset standard brightness; and
adjusting the initial optical parameter to the fourth optical parameter and determining the fourth optical parameter as the second optical parameter.

15. The method according to claim 4, wherein repeating steps (i) and (ii), in each step (i), the first brightness value is derived from first brightness of different FOVs in an image generated by a same instance of the first reaction; or
the first brightness value is derived from first brightness of a same FOV from different instances of the first reaction; or
the first brightness value is derived from first brightness of different FOVs from different instances of the first reaction.

16. The method according to claim 15, wherein a number of repetitions of steps (i) and (ii) is less than or equal to three.

17. The method according to any one of claims 1 to 11, wherein after the step of determining the first optical parameter for sequencing, the method further comprises: recording and storing the first optical parameter.

18. The method according to any one of claims 1 to 11, wherein a coefficient of variation (CV) value of the first brightness value across different regions of the solid carrier is less than or equal to 5%.

19. The method according to any one of claims 1 to 11, wherein the biological sample is a nucleic acid molecule, and the first reaction and the second reaction are base extension reactions performed on the biological sample on the surface of the solid carrier.

20. A microscopic imaging apparatus, comprising a laser and a first optical parameter determination system, wherein the first optical parameter determination system is configured to determine a first optical parameter when performing microscopic imaging processing on a biological sample on a surface of a solid carrier, and the first optical parameter is laser power and/or laser time that meets a preset brightness standard.

21. The apparatus according to claim 20, wherein the first optical parameter determination system comprises:
a first brightness determination unit, configured to perform a first reaction on the biological sample based on an initial optical parameter, collect a first fluorescence signal on the surface of the solid carrier after the first reaction, and determine a first brightness value of the first fluorescence signal in at least part of a region of the solid carrier; and
a first brightness judgment unit, configured to judge whether the first brightness value meets the preset brightness standard by comparing the first brightness value with a preset standard brightness;
if the first brightness value meets the preset standard brightness, setting the initial optical parameters as the first optical parameter; and
if the first brightness value does not meet the preset standard brightness, adjusting the initial optical parameter based on a preset function so as to determine a second optical parameter that meets the preset standard brightness in the preset function, and replacing the initial optical parameter with the second optical parameter and repeating the operations of the first brightness value determination unit and the first brightness value judgment unit until the brightness meets the standard, thereby determining the first optical parameter,
wherein the preset function is a function established based on a second brightness value of a second fluorescence signal and a third optical parameter, the second fluorescence signal is collected from at least part of the solid-carrier surface after the biological sample undergoes a second reaction,
the third optical parameter is the laser power and/or laser irradiation time used during the collection, and the second optical parameter being second laser power and/or second laser irradiation time.

22. The apparatus according to claim 21, wherein a calculation formula for the initial optical parameter is: Initial Optical Parameter = A × b, wherein A is an initial laser power, an initial laser irradiation time, or an initial laser parameter determined based on the initial laser power and the initial laser irradiation time of the laser; b is a ratio of a quality-control optical parameter to an average optical parameter of the solid carrier, wherein
the quality-control optical parameter is quality-control laser power, and the average optical parameter is average laser power, or
the quality-control optical parameter is a quality control laser irradiation time, and the average optical parameter is an average irradiation time, or
the quality-control optical parameter is a quality control initial laser parameter, and the average optical parameter is an average initial laser parameter.

23. The apparatus according to claim 21, wherein the step of performing the first reaction on the biological sample, collecting the first fluorescence signal on the surface of the solid carrier after the first reaction, and determining the first brightness value of the first fluorescence signal in at least part of the region of the solid carrier comprises:
performing the first reaction on the biological sample, collecting an image of at least one field of view (FOV) where the first reaction occurs on the surface of the solid carrier, estimating average brightness value based on brightness value of each bright spot in the image, and outputting the average brightness value as the first brightness value.

24. The apparatus according to claim 23, wherein the image is collected from an image of one FOV.

25. The apparatus according to claim 23, wherein the first reaction is one of first N reactions performed on the biological sample.

26. The apparatus according to claim 25, wherein a value of N ranges from 1 to 5.

27. The apparatus according to claim 23, wherein a method for estimating the average brightness value based on the brightness value of each bright spot in the image comprises:
identifying signal peaks and background peaks based on images of a plurality of detection channels in one FOV;
fitting greyscale values of all pixels in the image based on the signal peaks and the background peaks to determine a signal-peak distribution curve and a background-peak distribution curve; and
determining the average brightness value based on the signal-peak distribution curve and the background-peak distribution curve.

28. The apparatus according to claim 27, wherein determining the average brightness value based on the signal-peak distribution curve and the background-peak distribution curve comprises:
determining a median value of the signal peaks based on the signal-peak distribution curve;
determining a median value of the background peaks based on the background-peak distribution curve; and
determining a difference between the median value of the signal peaks and the median value of the background peaks, and using the difference as the average brightness.

29. The apparatus according to claim 21, wherein the preset standard brightness is a preset standard brightnessvalue range.

30. The apparatus according to claim 29, wherein judging whether the first brightness value meets the standard by comparing the first brightness value with the preset standard brightness comprises:
comparing the first brightness value with the preset standard brightness, and determining that the first brightness value meets the preset brightness standard if the first brightness value falls within the preset standard brightness value range;
determining that the first brightness valuefirst brightness does not meet the preset brightness standard if the first brightness value does not fall within the preset standard brightness value range.

31. The apparatus according to any one of claims 20 to 30, wherein the preset function comprises at least one selected from a brightness-laser power function, a brightness-laser irradiation time function, and a brightness-laser power-laser irradiation time function.

32. The apparatus according to claim 21, wherein a method for establishing the preset function comprises:
setting a plurality of third optical parameters, performing a third reaction based on the different third optical parameters, collecting a third fluorescence signal on the surface of the solid carrier after the third reaction, and determining the second brightness value of each third fluorescence signal, the third optical parameters being preset laser power, preset laser irradiation time, or a preset laser power-laser irradiation time array; and
performing fitting to obtain the preset function based on the third optical parameters and the second brightness.

33. The apparatus according to claim 21, wherein the step of adjusting the initial optical parameter based on the preset function so as to determine the second optical parameter comprises:
determining a fourth optical parameter based on the preset function and the preset standard brightness; and
adjusting the initial optical parameter to the fourth optical parameter and determining the fourth optical parameter as the second optical parameter.

34. The apparatus according to claim 21 or 23, wherein when the first brightness value determination unit and the first brightness value judgment unit are repeated, in each first brightness determination unit, the first brightness value is derived from first brightness of different FOVs in an image generated by a same instance of the first reaction; or
the first brightness value is derived from first brightness of a same FOV from different instances of the first reaction; or
the first brightness value is derived from first brightness of different FOVs from different instances of the first reaction.

35. The apparatus according to claim 34, wherein a number of repetitions of the first brightness value determination unit and the first brightness value judgment unit is less than or equal to three.

36. The apparatus according to any one of claims 20 to 30, further comprising a storage unit, wherein the storage unit is connected to the first brightness value judgment unit, and the storage unit is configured to record and store the first optical parameter.

37. The apparatus according to any one of claims 20 to 30, wherein a coefficient of variation (CV) value of the first brightness value across different regions of the solid carrier is less than or equal to 5%.

38. The apparatus according to any one of claims 20 to 30, wherein the biological sample is a nucleic acid molecule, and the first reaction and the second reaction are base extension reactions performed on the biological sample on the surface of the solid carrier.

39. Use of the microscopic imaging apparatus according to any one of claims 20 to 38 in sequencing.

40. A method for acquiring a preset optical parameter of a sequencing chip, comprising: obtaining a first optical parameter using the method for determining the first optical parameter in the microscopic imaging method according to any one of claims 1 to 19, and using a value of the first optical parameter as a preset optical parameter of the sequencing chip.

41. A sequencing method, comprising: performing microscopic optical imaging on a fluorescence signal generated by a biological sample on a sequencing chip using the microscopic imaging method according to any one of claims 1 to 19; or performing microscopic optical imaging on a fluorescence signal generated by a biological sample on a sequencing chip using the microscopic imaging apparatus according to any one of claims 20 to 38, and analyzing an imaging result to obtain a specific sequence of the biological sample on the sequencing chip.

42. An electronic device for determining an optical parameter during sequencing, comprising a memory and a processor,
wherein the processor runs a program corresponding to executable program code by reading the executable program code stored in the memory, so as to implement the microscopic imaging method according to any one of claims 1 to 19.

43. A computer-readable storage medium, wherein the computer-readable storage medium stores a computer program, wherein the program, when run by a processor, implements the microscopic imaging method according to any one of claims 1 to 19.
